# EUROPÄISCHE PATENTSCHRIFT

(11) **EP 3 945 295 B1**
(45) Veröffentlichungstag und Bekanntmachung des Hinweises auf die Patenterteilung: **16.08.2023**
(21) Anmeldenummer: 21000185.5
(22) Anmeldetag: 13.07.2021
(51) Int. Cl.: G01G 13/24

(54) **DIFFERENTIALDOSIERGERÄT**
DIFFERENTIAL DOSING DEVICE
DISPOSITIF DE DOSAGE DIFFÉRENTIEL

(30) Priorität: 28.07.2020 DE 102020004573
(43) Veröffentlichungstag der Anmeldung: 02.02.2022
(73) Patentinhaber: HOSOKAWA ALPINE Aktiengesellschaft, 86199 Augsburg (DE)
(72) Erfinder: BORN, Olaf, 86486 Bonstetten (DE); VOGELE, Tobias, 86159 Augsburg (DE)

(56) Entgegenhaltungen:
- EP-A1- 0 201 066
- EP-A2- 1 632 759
- DE-U1-202011 105 158
- US-A- 5 670 751

## Beschreibung

Die Erfindung richtet sich auf ein Differentialdosiergerät mit Druckkompensation welches über eine Abwurfeinrichtung (2) mit einem Prozesssystem verbunden ist.

In vielen verfahrenstechnischen Prozessen kommen gravimetrische Dosierungen zum Einsatz. Dabei handelt es sich häufig um geschlossene Systeme. Diese werden beispielsweise bei staubenden oder gesundheitsgefährdenden Produkten eingesetzt. Hierbei besteht das Problem, dass sich Druckschwankungen aus dem Prozesssystem negativ auf die gravimetrische Dosierung auswirken. Dies führt zur fehlerhaften Gewichtserfassung und somit zu fehlerhaften Durchsatzberechnungen und zu mangelhafter Dosiergenauigkeit. Um Fehler von mechanischen Druckschwankungen aus dem Prozesssystem auf die gravimetrische Dosierung zu minimieren werden mechanische Druckkompensatoren eingesetzt, diese Entkoppeln die Dosierung vom Restsystem. Die Druckkompensatoren werden oberhalb und unterhalb der Produktabwurfstelle der Dosierung in das nachfolgende Prozesssystem eingebaut. Sie sollen den Druck bzw. die Druckschwankungen aus dem Prozesssystem aufnehmen und von dem Dosiersystem fernhalten. Die Wirkrichtung der durch den Druck bzw. die Druckschwankungen entstehenden Kraft wirkt parallel zur Wirkrichtung der Lastenaufnehmer oder Wägezellen der in der gravimetrischen Dosierung eingesetzten Waagen, sodass sich Fehler aufgrund von Toleranzen unmittelbar auf das Wägeergebnis auswirken. Bei den Toleranzen handelt es sich um Toleranzen mechanischer Natur wie Maßhaltigkeit und auch um Toleranzen durch die Reproduzierbarkeit der Montage wie die Achsparallelität oder Winkeltreue. Wenn es nicht gelingt die Druckschwankungen vollständig durch die Druckkompensatoren aufzunehmen, wirken sie auf die Waage des Dosiersystems und es kommt zu Fehlmessungen und dadurch zu einer fehlerbehafteten Dosierung des Produktes.

In der CH 658724 A5 ist ein gattungsgemäßes Dosiersystem offenbart. Die Produktaufgabe in den Trichter der Dosiervorrichtung, die Schutzgasleitung und die Abnahmeleitung sind über flexible balgartige Verbindungsstücke mit der Dosierwaage verbunden. Sie vermeiden das Übertragen von Kräften in vertikaler Richtung zwischen der Peripherie und der Dosierwaage.

Auch die DE 28 55 751 zeigt Druckkompensatoren, welche in vertikaler Richtung wirken, um Druckschwankungen aus dem System auf die gravimetrische Dosierung zu reduzieren.

Diese Systeme sind nicht empfindlich genug, um alle vertikal wirkenden Kräfte auffangen, es kommt zu Fehlsignalen der Waage der Dosierung und so zu Fehldosierung.

Die DE 20 2011 105 158 U1 offenbart eine Druckkompensation für Differentialdosierwaagen, welche so ausgeführt ist, dass Druckschwankungen nicht über ausgleichende Flächen kompensiert werden, sondern dass Störkräfte aus Druckschwankungen im umgebenden System nur in horizontaler Richtung als Querkräfte auf das Wägesystem wirken. Dabei ist nur eine ausgleichende flexible Verbindung zwischen der Differentialdosierwaage und den Prozesssystem vorgesehen.

Der Erfindung liegt daher die Aufgabe zugrunde, eine Lösung zu schaffen, die es ermöglicht vertikal wirkenden Kräfte aus dem Prozesssystem zu kompensieren, sodass sie nicht auf die gravimetrische Dosierung wirken und die Dosierung negativ beeinflussen.

Bei einer Vorrichtung zur Druckkompensation bei Differentialdosiergeräten der eingangs beschriebenen Art wird die Aufgabe erfindungsgemäß durch das Kennzeichen des Hauptanspruchs gelöst.

Bei Vorrichtungen aus dem Stand der Technik wirken die Druckkompensatoren, welche die Dosiergeräte vom Rest des Prozesssystems entkoppeln, in vertikaler Richtung, da sie ober- und unterhalb der Produktabwurfstelle des Dosiersystems in das Prozesssystem angeordnet sind, also in der gleichen Richtung wie die Lastaufnehmer der Waage der Dosierung. Werden nicht alle durch Druck bzw. Druckschwankungen erzeugten Kräfte in vertikaler Richtung aus dem System von den Druckkompensatoren aufgenommen, wirken sie sich als Fehler bei der Dosierung aus.

Erfindungsgemäß erfolgt die Druckkompensation bei Differentialdosiergeräten derart, dass die Druckkompensatoren so angeordnet werden, dass die Krafteinwirkungen aus dem Prozesssystem auf die Waage des Dosiersystems nicht mehr parallel zur Wirkrichtung der Lastaufnehmer bzw. Wägezellen der Waage liegen, sondern um 90° gedreht dazu orientiert sind, also vertikal.

Erfindungsgemäß werden nun horizontal wirkende Druckkompensatoren zwischen die gravimetrische Dosiervorrichtung und dem Prozesssystem angeordnet.

Dazu wird das Auslaufstück des Differentialdosiergerätes, z.B. das Auslaufstück, in dem eine Dosierschnecke angeordnet ist, um einen vertikalen Flansch ergänzt, an dem dann ein vertikaler Druckkompensator befestigt wird. An diesem Flansch des Auslaufstücks wird ein gegenüberliegender Flansch befestigt. Beide Flansche sind über eine starre Verbindung miteinander verbunden. An diesem zweiten Flansch schließt sich ebenfalls ein vertikaler Druckkompensator an. Die jeweils zweite Seite der Druckkompensatoren ist mit dem Gehäuse der Abwurfeinheit verbunden. Die Druckkompensatoren sind als kreisringförmige Kompensatoren ausgebildet. Die Abwurfeinheit nimmt das dosierte Produkt auf und leitet es in die nachfolgenden Prozesse des Systems. Bei den nachfolgenden Prozessen kann es sich um eine Mahlung, eine Windsichtung oder jeder andere verfahrenstechnische Prozess handeln. Dieser Aufbau führt in der Abwurfeinheit zur Kraftentkopplung. Die Waage des Differentialdosiergerätes kann sich frei bewegen und mögliche Druckkräfte heben sich in der beschriebenen Konstruktion aus den mit Kompensator umgebenen Flanschpaar auf.

Eine mögliche resultierende Restkraft wirkt sich nur horizontal auf die Waage aus, nicht mehr vertikal und somit nicht mehr auf die Lastaufnehmer der Waage. Dadurch überlagern sich das Drucksignal und das Wägesignal nicht mehr. Als Ergebnis erhält man ein sauberes Wägesignal, frei von fehlerhaften Druckeinflüssen.

Ein bevorzugtes Ausführungsbeispiel der Erfindung ist in der nachfolgenden Abbildung dargestellt.

Es zeigt:

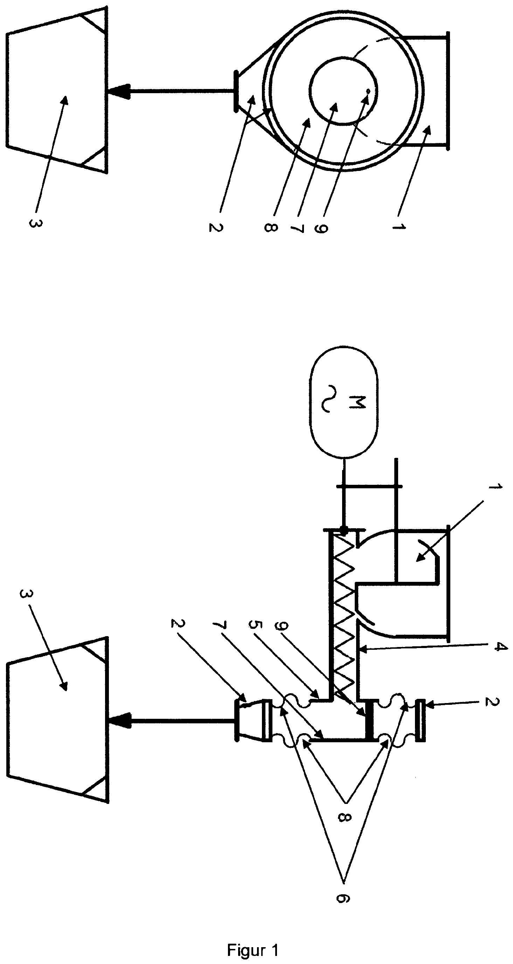

Figur 1: Mahlprozess mit Differentialdosiergerät mit der erfindungsgemäßen Druckkompensation in der Vorderansicht und im Schnitt

Bei dem Ausführungsbeispiel nach Figur 1 ist ein Differentialdosiergerät (1) in einem geschlossenen System dargestellt. Das Differentialdosiergerät (1) ist über eine Abwurfeinheit (2) mit einem Mahlprozess (3) verbunden.

Die Dosierschnecke des Differentialdosiergerätes ist an ihrer Auslaufstück mit einer Abwurfeinheit (2) verbunden, über die das abgewogene Material in den Mahlprozess (3) geführt wird.

Das Auslaufstück (4) des Dosiergerätes, hier das Auslaufstück der Dosierschnecke, weist einen vertikalen Flansch (5) auf. Dieser wird mit der Abwurfeinheit (2), verbunden. Die Verbindung übernimmt ein Druckkompensator (6), der den Flansch (5) mit dem Gehäuse der Abwurfeinheit (2) verbindet. Die Abwurfeinheit (2) weist auf ihrer dem Auslaufstück (4) mit Flansch (5) gegenüberliegenden Seite einen weiteren Flansch (7) auf. Dieser ist zum ersten Flansch parallel ausgerichtet. Dieser wird ebenfalls über einen Druckkompensator (8) mit dem Gehäuse des Abwurfeinheit (2) verbunden. Das Anschlussstück (4) mit Flansch (5) und der gegenüberliegende Flansch (7) sind über ein Verbindungselement (9) starr miteinander verbunden.

Die Druckkompensatoren können als kreisringförmige Kompensatoren, sog. Ringkompensatoren ausgebildet sein.

Die Waage des Dosiergerätes kann sich durch diesen Aufbau vertikal frei bewegen. Es wirken nur horizontale Druckkräfte auf die Waage. Horizontal wirkende Kräfte beeinflussen das Wägeergebnis nicht, denn die Waage registriert diese horizontalen Druckkräfte nicht, da die Krafteinwirkung nicht parallel zur Wirkrichtung der Lastenaufnehmer der Waage liegt. Es wirken keine vertikalen Druckkräfte mehr auf die Waage die zu Fehlern des Wägesignals und damit zu Fehlern im Wägeergebnis, die wiederum zu Fehlern in der Dosierung führen.

### Bezugszeichen:

1. Differentialdosiergerät (1)
2. Abwurfeinheit (2)
3. Mahlprozess (3)
4. Auslaufstück (4)
5. Flansch (5)
6. Druckkompensator, Ringkompensator (6)
7. Flansch (7)
8. Druckkompensator, Ringkompensator (8)
9. Verbindungselement (9)

## Patentansprüche

1. Differentialdosiergerät (1) mit Druckkompensation welches über eine Abwurfeinrichtung (2) mit einem Prozesssystem (3) verbunden ist **dadurch gekennzeichnet, dass** das Differentialdosiergerät (1) an seinem Auslaufstück (4) einen ersten vertikalen Flansch (5) aufweist und diesem gegenüber ein zweiter vertikaler Flansch (7) angeordnet ist, wobei die Flansche (5, 7) über vertikal ausgerichtete Druckkompensatoren (6, 8) mit der Abwurfeinheit (2) verbunden sind.

2. Differentialdosiergerät (1) nach Anspruch 1 **dadurch gekennzeichnet, dass** die Kompensatoren (6, 8) ringkeisförmige Druckkompensatoren (6, 8) sind.

3. Differentialdosiergerät (1) nach Anspruch 1, **dadurch gekennzeichnet, dass** die gegenüberliegenden Flansche (5, 7) parallel angeordnet sind.

4. Differentialdosiergerät (1) nach Anspruch 1, **dadurch gekennzeichnet, dass** die gegenüberliegenden Flansche (5, 7) über ein Verbindungselement miteinander verbunden sind.

5. Differentialdosiergerät (1) nach Anspruch 1, **dadurch gekennzeichnet, dass** die gegenüberliegenden Flansche (5, 7) über ein Verbindungselement starr miteinander verbunden sind.

6. Differentialdosiergerät (1) nach Anspruch 1, **dadurch gekennzeichnet, dass** das Prozesssystem (3) ein geschlossenes System ist.

7. Differentialdosiergerät (1) nach Anspruch 3, **dadurch gekennzeichnet, dass** das nachfolgende Prozesssystem (3) eine verfahrenstechnische Maschine ist.

8. Differentialdosiergerät (1) nach Anspruch 4, **dadurch gekennzeichnet, dass** die verfahrenstechnische Maschine eine Mühle, ein Windsichter oder ein Mischer ist.

## Claims

1. Differential dosing unit (1) with pressure compensation that is connected to a processing system (3) via a discharge device (2)
**characterised in that**
the differential dosing unit (1) has a first vertical flange (5) fitted on its outlet section (4) and that a second vertical flange (7) is located opposite the first one, whereby the flanges (5, 7) are connected to the discharge device (2) via vertically aligned pressure compensators (6, 8).

2. Differential dosing unit (1) in accordance with Claim 1, **characterised in that** the compensators (6, 8) are donut-shaped pressure compensators (6, 8).

3. Differential dosing unit (1) in accordance with Claim 1, **characterised in that** the opposite flanges (5, 7) are arranged parallel to each other.

4. Differential dosing unit (1) in accordance with Claim 1, **characterised in that** the opposite flanges (5, 7) are connected with each other via a connecting element.

5. Differential dosing unit (1) in accordance with Claim 1, **characterised in that** the opposite flanges (5, 7) are rigidly connected with each other via a connecting element.

6. Differential dosing unit (1) in accordance with Claim 1, **characterised in that** the processing system (3) is an enclosed system.

7. Differential dosing unit (1) in accordance with Claim 3, **characterised in that** the downstream processing system (3) is a process-technological machine.

8. Differential dosing unit (1) in accordance with Claim 4, **characterised in that** the process-technological machine is a mill, an air classifier or a mixer.

## Revendications

1. Dispositif de dosage différentiel (1) avec compensation de pression qui est relié avec un système de procédé (3) par l'intermédiaire d'un dispositif d'éjection (2), **caractérisé par le fait que** la pièce d'écoulement (4) du dispositif de dosage différentiel (1) est équipé d'une première bride (5) verticale et vis-à-vis de celle-ci se trouve une deuxième bride verticale (7), les deux brides (5, 7) sont reliées avec l'unité d'éjection (2) par des compensateurs de pression (6, 8) alignés verticalement.

2. Dispositif de dosage différentiel (1) suivant la revendication 1, **caractérisé par le fait que** les compensateurs (6, 8) sont des compensateurs de pression de forme d'anneau circulaire.

3. Dispositif de dosage différentiel (1) suivant la revendication 1, **caractérisé par le fait que** les brides (5, 7) opposées sont disposées en parallèle.

4. Dispositif de dosage différentiel (1) suivant la revendication 1, **caractérisé par le fait que** les brides (5, 7) opposées sont reliées l'une avec l'autre par un élément de raccordement.

5. Dispositif de dosage différentiel (1) suivant la revendication 1, **caractérisé par le fait que** les brides (5, 7) opposées sont reliées de manière rigide l'une avec l'autre par un élément de raccordement.

6. Dispositif de dosage différentiel (1) suivant la revendication 1, **caractérisé par le fait que** le système de procédé (3) est un système fermé.

7. Dispositif de dosage différentiel (1) suivant la revendication 3, **caractérisé par le fait que** le système de procédé (3) qui suit est une machine pour procédés industriels.

8. Dispositif de dosage différentiel (1) suivant la revendication 4, **caractérisé par le fait que** la machine pour procédés industriels est un broyeur, un classificateur à air ou un dispositif de mélange.
